# EUROPEAN PATENT SPECIFICATION

(11) **EP 4 127 845 B1**
(45) Date of publication and mention of the grant of the patent: **01.05.2024**
(21) Application number: 21715276.8
(22) Date of filing: 31.03.2021
(51) Int. Cl.: G05B 19/418, G06Q 50/02

(54) **ORE FLOW OPTIMIZATION**
ERZFLUSSOPTIMIERUNG
OPTIMISATION D'ÉCOULEMENT DE MINERAI

(30) Priority: 01.04.2020 EP 20167628
(43) Date of publication of application: 08.02.2023
(73) Proprietor: ABB SCHWEIZ AG, 5400 Baden (CH)
(72) Inventor: MISHCHENKO, Kateryna, 72242 Västerås (SE); GARCIA-GABIN, Winston, 16972 Solna (SE); FEYZMAHDAVIAN, Hamid, 169 73 Stockholm (SE)
(74) Representative: Kransell & Wennborg KB
(86) International application number: PCT/EP2021/058397
(87) International publication number: WO 2021/198318

(56) References cited:
- EP-A1- 2 645 191
- US-A1- 2003 069 680

## Description

### FIELD OF THE INVENTION

The present invention relates to a method, ore flow control system and computer program product for controlling ore flow in a mine.

### BACKGROUND

Today, different processes in underground mines are controlled manually and separately, which makes the overall process in the mine suboptimal with high level of uncertainties. As a result, to meet production goals, lots of "tricks" and fixes are done by mine operators. Such fixes should be done fast enough to prevent disturbances in production.

Thus, there is a need for improving the way a mining process is controlled.

One attempt at improving the control of a mining process is disclosed in CN 105528644. This document discloses a dynamic table effect optimization system for mining shovel, transportation, and discharge, in which the dynamic table effect optimization system for mining shovel, transportation, and discharge includes a GPS system for shovel loading equipment, and Dynamic weighing system, crusher and belt control system of rock removal equipment. The document describes the use of a queuing theory model to calculate the load queue length of the system per unit time and using mathematical optimization methods to calculate the optimal ratio of vehicles and shovel loading equipment.

Another attempt that is generally directed towards material flow is disclosed in US 8930018, where a control device processes event-based sensor signals for controlling material flows.

US 2003/0069680 is concerned with the provision of dispatch assignments to a plurality of vehicles in a mine. The document describes the use of an optimal production plan that determines optimal material flow rates between each shovel and processing site to satisfy production requirements, as well as the determining of optimal assignments for trucks.

EP 2645191 discloses the visualization of a mining process, which mining process comprises subsystems as well interim storages or storage areas. The document mainly describes the visualization of planned or optimized material flows as well as the need to free up space at a cutting face and move material away from the cutting face to interim storages or holding areas.

These documents describe various ways of performing local optimization as well as visualization of a mining process.

However, there is a need for a control of the mining process that takes a concerted look at the whole process in order to obtain a better control without suboptimizations.

### SUMMARY OF THE INVENTION

The present invention addresses this situation. The invention therefore aims at solving the problem of obtaining a better control in a mine without suboptimizing.

This object is according to a first aspect of the invention solved through a method according to claim 1.

This object is according to a second aspect of the invention solved through an ore flow control system according to claim 11.

This object is according to a third aspect of the invention achieved through a computer program product according to claim 15.

The control of an ore flow in a mine may involve the control of a number of sequential operations being performed in the mine. The control may additionally involve the control of equipment, such as machines carrying out at least some activities of the operation.

The ore handling operations may comprise ore processing operations, such as blasting and crushing operations as well as ore transporting operations such as hoisting operations or transporting operations using equipment such a load haul and dump vehicles, trucks, trains, wagons and conveyor belts. For this reason, the subsystems may comprise processing control subsystems that may be blasting and crushing subsystems as well as transporting subsystems configured to control the transporting of ore.

A subsystem may additionally comprise a local controller controlling equipment handling or transporting ore.

According to a first variation of the first aspect, the method may further comprise obtaining, in the ore flow optimizer, input data and output data of each ore flow coordinator, the input data comprising a planned amount of ore to be handled in an operation controlled by a downstream subsystem for which ore flow coordination is made and the amount of ore delivered from an operation controlled by an upstream subsystem for which ore flow coordination is made and the output data comprising an actual amount of ore available for handling by the operation controlled by the downstream subsystem. The controlling may comprise controlling, by the ore flow coordinators, the operation of the corresponding upstream subsystem and downstream subsystem for avoiding interruptions.

In a corresponding first variation of the second aspect, the ore flow optimizer is in this case further configured to obtain input data and output data of each ore flow coordinator, the input data comprising a planned amount of ore to be handled in an operation controlled by a downstream subsystem for which ore flow coordination is made and the amount of ore delivered from an operation controlled by an upstream subsystem for which ore flow coordination is made and the output data comprising an actual amount of ore available for handling by the operation controlled by the downstream subsystem. The ore flow coordinators are in turn configured to control the operation of the corresponding upstream subsystem and downstream subsystem for avoiding interruptions.

In a second variation of the first aspect, the method further comprises, in and by an ore flow coordinator, collecting input data and output data of subsystems for which ore flow coordination is made, determining own input data and output data and transmitting the own and collected input data and output data to the ore flow optimizer.

In a second corresponding variation of the second aspect, an ore flow coordinator is further configure to collect input data and output data of subsystems for which ore flow coordination is made, determine own input data and output data and transmit the own and collected input data and output data to the ore flow optimizer,

In a third variation of the first aspect the method further comprises, in and by the ore flow coordinator, receiving own and connected subsystem targets from the ore flow optimizer and delivering the received subsystem targets to the subsystems for which ore flow coordination is made.

In a third corresponding variation of the second aspect, the ore flow coordinator is further configured to receive own and subsystem targets from the ore flow optimizer and deliver the received subsystem targets to the subsystems for which ore flow coordination is made.

According to a fourth variation of the first aspect, the method further comprises, in an ore flow coordinator, investigating the output of operations controlled by a subsystem for which ore flow coordination is being performed, determining if the target of the subsystem will be met or not based on the investigation and reporting to the ore flow optimizer if the subsystem is unable to reach its target in order for the ore flow optimizer to update at least the target.

According to a corresponding fourth variation of the second aspect, an ore flow coordinator is further configured to investigate the output of operations controlled by a subsystem for which ore flow coordination is being performed, determine if the target of the subsystem will be met or not based on the investigation and report to the ore flow optimizer if the subsystem is unable to reach its target in order for the ore flow optimizer to at least update the target.

According to a fifth variation of the first aspect, wherein if determining, in the ore flow coordinator, that a subsystem for which ore flow coordination is performed is unable to meet its target, the method further comprises rebalancing the associated intermediate ore storage system and only reporting the missed target if the target is still not met after rebalancing.

According to a corresponding fifth variation of the second aspect, the ore flow coordinator if determining that a subsystem for which ore flow coordination is performed is unable to meet its target, is further configured to rebalance the associated intermediate ore storage system and only report the missed target if the target is still not met after rebalancing.

According to a sixth variation of the first aspect the rebalancing of the intermediate ore storage system comprises determining the ore flow rate of the operations controlled by the upstream subsystem, determining the ore flow rate of the operations controlled by the downstream subsystem and regulating the ore flow rates for balancing interruptions.

According to a corresponding sixth variation of the second aspect, the ore flow coordinator when preforming rebalancing of the intermediate ore storage system is configured to determine the ore flow rate of the operations controlled by the upstream subsystem, determine the ore flow rate of the operations controlled by the downstream subsystem and regulating the ore flow rates for balancing interruptions

Accordant to a seventh variation of both aspects the determining of the ore flow rate of the operations controlled by the downstream subsystem is based on the determined ore flow rate of the operations controlled by the upstream subsystem.

Accordant to an eighth variation of the first aspect, the method further comprises determining, in the ore flow coordinator, the status of the associated ore storage system and the step of determining the ore flow rate of the operations controlled by the downstream subsystem is based also on the status.

According to an eighth variation of the second aspect, the ore flow coordinator is further configured to determine the status of the associated ore storage system and when determining the ore flow rate of the operations controlled by the downstream subsystem is configured to determine this ore flow rate based also on the status.

According to a ninth variation of the first aspect, the method further comprises informing, by the ore flow coordinator, the downstream subsystem of the ore flow rate to be used.

According to a ninth corresponding variation of the second aspect, the ore flow coordinator is further configured to inform the downstream subsystem of the ore flow rate to be used.

The present invention has a number of advantages. It does for instance allows a mining process to be optimized without sub optimizing.

### BRIEF DESCRIPTION OF THE DRAWINGS

The present invention will in the following be described with reference being made to the accompanying drawings, where
Fig. 1 schematically shows a number of sequential operations being performed in a mine together with an ore flow control system for the mine comprising a number of ore control subsystems, a number of ore flow coordinators and an ore flow optimizer,
Fig. 2 shows a flow chart of number of method steps in a method of controlling ore flow in a mining process,
Fig. 3 shows further steps being performed in an ore flow coordinator in order to provide the ore flow optimizer with input and output data of the subsystems and ore flow coordinators and to receive targets from the ore flow optimizer,
Fig. 4 schematically shows a target implementation step being performed in an ore control subsystem,
Fig. 5 shows a number of method steps being performed in an ore flow coordinator for handling the situation when a target is not met,
Fig. 6 schematically shows the four first operations of a number of initial steps in the mining process, and
Fig. 7 schematically shows a number of steps performed in an ore flow coordinator for balancing an associated intermediate ore storage system, and
Fig. 8 schematically shows a data carrier with computer program code, in the form of a CD-ROM disc, for implementing the machine set point determining device.

### DETAILED DESCRIPTION OF THE INVENTION

In the following, a detailed description of preferred embodiments of a method, ore flow control system and computer program product controlling ore flow in a mine will be given.

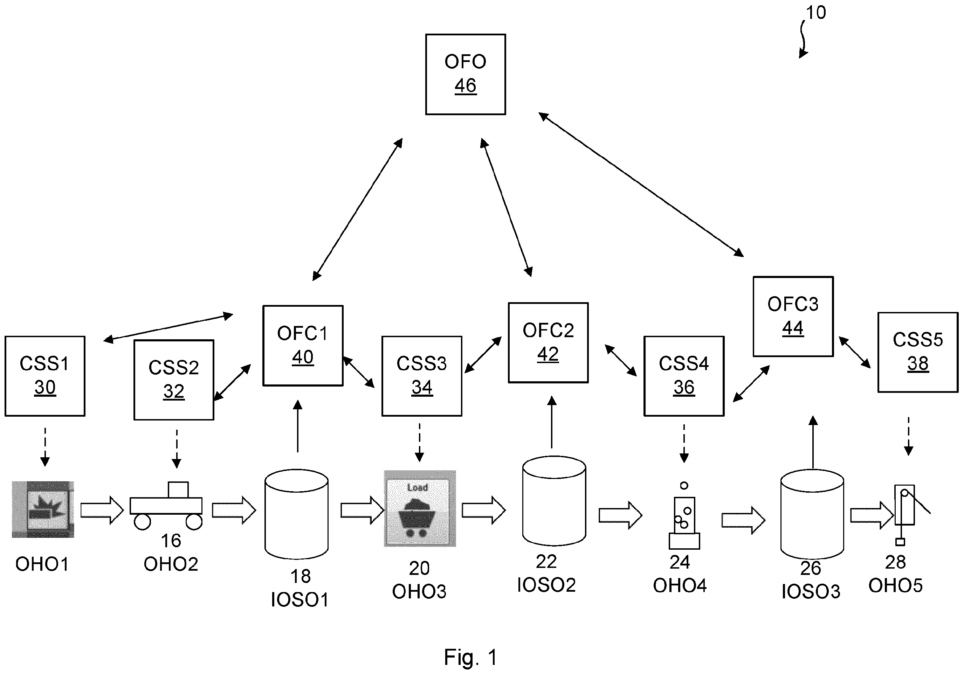

Fig. 1 schematically shows a number of exemplifying operations of a mining process as well as an ore flow control system for controlling at least some of the operations.

The operations comprise a first ore handling operation OHO1, which may be a first ore processing operation that as an example is a blasting operation. This is followed by a second ore handling operation OHO2, which may be a first ore transporting operation involving the transporting of ore using equipment such as Load Haul and Dump (LHD) vehicles 16. The second ore handling operation OHO2 is followed by a first intermediate ore storing operation IOSO1, which first intermediate storing operation IOSO1 may involve storing of ore in one or more ore passes of a first intermediate ore storage system 18. After the first intermediate ore storing operation IOSO1 follows a third ore handling operation OHO3, which may be a second ore transporting operation involving a transporting by ore transporting equipment 20 such as trucks, trains, wagons or conveyor belts. Thereafter follows a second intermediate storing operation IOSO2, which may likewise be carried out using ore passes in a second intermediate ore storage system 22. After the second intermediate ore storing operation IOSO2 follows a fourth ore handling operation OHO4, which may be a second ore processing operation such as an ore crushing operation using equipment such as one or more ore crushers 24. Thereafter may follow a third intermediate ore storing operation IOSO3, which may be carried out using ore passes in a third intermediate ore storage system 26. The third intermediate ore storing operations IOSO3 is finally followed by a fifth ore handling operation OHO5, which maybe a third ore transporting operation that as an example is a hoisting operation using hoisting equipment 28. A hoisting operation may also be considered to be an ore handling operation.

It should here be realized that the system in fig. 1 is a mere example and that further or fewer operations may be included. It is also possible with additional types of operations, such as charging, drilling and shotcreting.

In order to control at least some of the operations there is an ore flow control system 10 that comprises a number of ore control subsystems set to control the different operations, which may be the control of equipment involved in performing the operations. For this reason, an ore control subsystem may comprise one or more controllers set to control such equipment. The ore control subsystems may comprise a first ore control subsystem CSS1 30 controlling the first ore handling operation OHO1, a second ore control subsystem CSS2 32 controlling the second ore handling operation OHO2, a third ore control subsystem CSS3 34 controlling the third ore handling operation OHO3, a fourth ore control subsystem CSS4 36 controlling the fourth ore handling operation OHO4 and a fifth ore control subsystem CSS5 38 controlling the fifth ore handling operation OHO5. As the first and fourth ore handling operations are ore processing operations, the first and fourth ore control subsystem 30 and 36 may also be considered to be a first and second ore processing subsystem. As the, second third and fifth ore handling operations are ore transporting operations, the second, third and fifth ore control subsystems 32, 34 and 38 may also be considered to be ore transporting subsystems. The above-mentioned ore handlings operations may additionally each be considered to be operations that are controlled to provide a certain ore flow, for instance through controlling the operations to meet a control reference or set point. In the control system 10 there is furthermore a number of ore flow coordinators 40, 42 and 44, which ore flow coordinators are provided for coordinating ore flow between two neighbouring ore handling operations. An ore flow coordinator may more particularly be provided in relation to an ore storage system between two such ore handling operations, where the ore storage system may comprise one or more ore passes. The ore flow coordinator may also be considered as an ore control subsystem and this subsystem may as an example be a subsystem set to keep a certain ore level in the associated ore storage system. The subsystems and ore flow coordinators may be provided sequentially after each other according to the flow of operations in the mine.

In the example given here a first ore flow coordinator OFC1 40 is placed between the second and third ore control subsystems 32 and 34, the second ore flow coordinator OFC2 42 is placed and connected between the third and fourth ore control subsystems 34 and 36 and the third ore flow coordinator OFC3 44 is placed and connected between the fourth and fifth ore control subsystems 36 and 38. The first ore handling system 30 in this case also has a connection to the first ore flow coordinator 40. Finally, there is an ore flow optimizer OFO 46 responsible for the overall control of the complete mining process. The ore flow estimator 46 is shown as communicating with the ore flow coordinators 40, 42 and 44.

The different subsystems 30, 32, 34, 36 and 38 as well as optionally also the ore flow coordinators 40, 42, 44 have input and output data, where input data is data that is an input to the control of the operation, such as the amount of ore desired to be handled, while the output data may be data related to the output of the operation, such as the amount of ore actually being handled. The input data and output data may be provided from the subsystems to the ore flow optimizer 46, for instance via the ore flow coordinators 40, 42 and 44 and the subsystems also receive control targets from the ore process optimizer 46, perhaps also via the ore flow coordinators 40, 42 and 44. The subsystems 30, 32, 34, 36 and 38 then control the operations towards meeting the targets set by the ore flow optimizer 46. It can also be seen that an ore flow coordinator obtains data from the subsystems between which it is placed and the flows of which it is to coordinate. Thereby an ore flow coordinator is connected to or communicates with an upstream subsystem as well as connected to or communicates with a downstream subsystem. It may also provide these subsystems with control parameters with which these subsystems may adjust their targets.

All subsystems may be implemented using controllers as distinct computational models emulating the behaviour of a corresponding operation or process in the mine, such as loading by LHD or crushing. These models could be implemented in different software and by different vendors, while an important point may be that they are connected to each other via ore flow coordinators, which provide links between them. This may be done through the ore flow coordinator transforming inputs and outputs into a predefined format required by each subsystem.

Here it should be realized that it is possible that not all subsystems are present, in this case it is possible that an ore flow coordinator is able to gather or determine the data needed by the ore flow optimizer or that an operator enters such information into the ore flow optimizer. In this case it is also possible that if the ore flow handling of the subsystem is controlled in some other way, for instance by subsystem operators receiving information related to the target and acting on it, such as operating a machine. In other instances, the operation could be considered to be static and the neighbouring operations being adapted to the speed with which the operation is carried out.

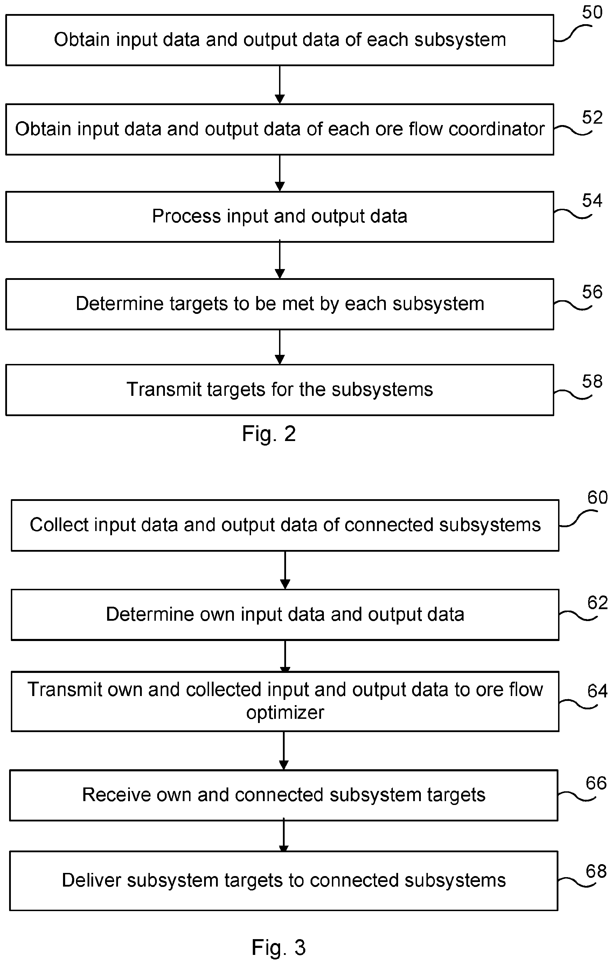

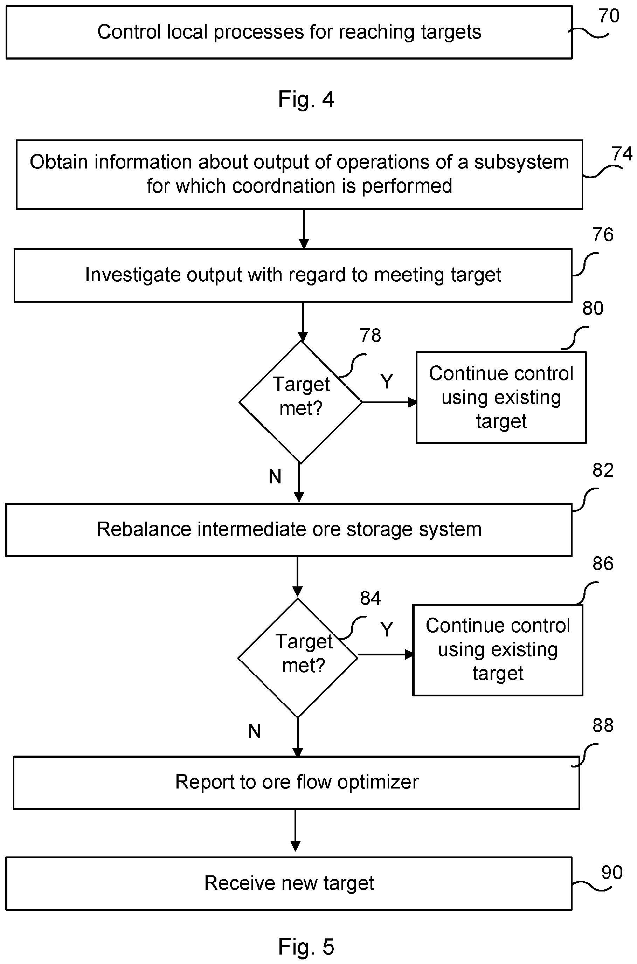

The operation of the control system 10 will now be described with reference also being made to fig. 2, which shows a number of method step in a method of controlling ore flow in the mining system and being performed by the ore flow optimizer 46 as well as to fig. 3, which shows some of the operation of an ore flow coordinator in some more detail and to fig. 4, which shows a step being performed by the subsystems and the ore flow coordinators.

The ore flow optimizer 46 obtains input data and output data of each subsystem 30, 32, 34, 36 and 38, step 50, where the input data comprises a planned amount of ore to be handled by the subsystem and the output data comprises an actual amount of ore actually being handled by the subsystem. A planned amount as well as an actual amount may be an amount of ore per shift, day or week. A planned amount may additionally be known outside of the subsystems, for instance in one or more of the ore flow coordinators 40, 42 and 44 or on a higher level such as in the ore flow optimizer 46, while the actual amount may be measured for instance at an output port of the subsystem or the input port of an ore storage system or a following subsystem. Input data may also comprise status data concerning the equipment used in the handling, such as number of vehicles, capacity of the vehicles etc.

The ore flow optimizer 46 optionally also obtains input data and output data of each ore flow coordinator 40, 42 and 44, step 52, where the input data may comprise a planned amount of ore to be handled by the equipment of a subsystem located downstream from the intermediate storage system that is associated with the ore flow coordinator, performing an ore flow coordination for the subsystem and the amount of ore delivered by equipment of a subsystem upstream of the intermediate ore storage system (amount of ore in the intermediate ore storage system) and the output data comprises the actual amount of ore available for handling by the equipment of the same downstream subsystem, which may be an actual amount having been produced by the downstream subsystem.

The input data of the first ore processing subsystem 30 may in this case be the amount of ore to be blasted according to the plan and the output data may be the actual amount of ore obtained through the blasting.

The input data of the first ore transporting subsystem 32 may be the planned amount of ore in tons to be transported by LHDs. The output data may in turn be the actual amount of ore to be transported (both total during one shift, day or week and the amount of ore in each ore pass in every sampling time).

The input data of the first ore flow coordinator 40 may be the planned amount of ore to be transported by the next coming subsystem (trucks or trains) in this example to be transported by the second transporting subsystem 34, the amount of ore in the ore passes of the first intermediate storage system 18 (the output from the previous subsystem) and possibly also the status of ore passes of the first intermediate storage system 18, which status may include limitations on lower and upper limit of the ore in each ore pass and availability/condition of ore passes. The output data may in turn comprise an actual amount of ore after balancing, available for further transporting by trucks at each ore pass in each sampling time as well as the total amount of ore in the first intermediate ore storing system 18.

The input data of the second ore transporting subsystem 34 may be the amount of ore planned to be transported as well as the amount of ore in the ore passes (the output from the first intermediate ore storage system). The output data may in turn be the actual amount of ore transported (both total during one shift, day or week and the amount of ore in each ore pass in every sampling time).

The input data of the second ore flow coordinator 42 may be the planned amount of ore to be handled by the following downstream subsystem, which in this example is the amount of ore to be crushed under the control of the second ore processing subsystem 36, the amount of ore in the ore passes of the second intermediate storage system 22 (the output from the previous subsystem) and possibly also the status of ore passes of the second intermediate storage system 22. The output data may in turn comprise an actual amount of ore after balancing, available for further handling at each ore pass in each sampling time as well as the total amount of ore in the second intermediate ore storage system.

The input data of the second ore processing subsystem 36 may in turn be the planned number of tons of ore to be crushed as well as the output from the intermediate ore storing system 22 of the neighbouring ore flow coordinator 42. The output data may be the amount of ore crushed at every sampling time by every crusher as well as the total amount of processed ore. States and conditions of crushers may form extra output.

The input data of the third ore flow coordinator 44 may be the planned amount of ore to be transported by the third transporting subsystem 38, the amount of ore in the ore passes of the third intermediate storage system 26 (the output from the previous subsystem) and the status of ore passes of the third intermediate storage system 26. The output data may in turn comprise an actual amount of ore after balancing, available for further transporting by at each ore pass in each sampling time as well as the total amount of ore.

The input data of the third ore transportation subsystem 38 may be the output from the previous block, which is the output of the intermediate ore storing system 26 associated with the third ore flow coordinator 44. The ore flow coordinator 44 provides the third ore transporting subsystem 38 with the information about the ore flow requirements. The output may in this case be the amount of ore hoisted for each sampling time.

The ore flow optimizer 46 may get information from the hardware sensors installed on mine equipment. The various subsystems may provide the ore flow optimizer 46 with the input and output data. This may be done directly by the subsystems.

Alternatively, and as is indicated in fig. 1, the ore flow coordinators 40, 42 and 44 may receive or collect at least the output data and optionally also the input data of at least subsystems that they interact with, such as subsystems for which they perform ore flow coordination. The received or collected data may then be submit to the ore flow optimizer 46. One way in which this may be done is shown in fig. 1 and indicated in the flow chart in fig. 3. An ore flow coordinator may collect input and output data of subsystems for which it performs ore flow coordination, step 60. It may also determine an own input and output data, step 62. The ore flow coordinator may then transmit the own and collected input and output data to the ore flow optimizer, step 64.

The first ore flow coordinator 40 may as an example collect input and output data from or for the first ore processing subsystem 30, input and output data from or for the first ore transporting subsystem 32 and input and output data from or for the second ore transporting subsystem 34. It may also determine the own input and output data and transmit all the data to the ore flow optimizer 46. In a similar manner the second ore flow coordinator 42 may collect input and output data from or for the second ore transporting subsystem 34 and input and output data from or for the second ore processing subsystem 36. It may also determine the own input and output data and transmit all the data to the ore flow optimizer 46. Finally, also the third ore flow coordinator 44 may collect input and output data from or for the second ore processing subsystem 36 and input and output data from or for the third ore transporting subsystem 38. It may also determine the own input and output data and transmit all the data to the ore flow optimizer 46.

This information may be continuously collected and then used to update the input/output requirement for each subsystem to maintain optimality for the overall production process. Finally, optimal solutions for the operation of the whole mine may be formulated, for instance as a combination of optimal solutions of each subsystem. Moreover, information can be transformed to the ore flow optimizer 46 through the ore flow coordinator providing the data and optionally also states of one or more of the subsystems.

After the ore flow optimizer has received input and output data in this way, it processes the input and output data, step 54.

The processing may involve the creation of an overall model that may be created based on the relationship between input and output data, such as input and output ore flow and flow rate for each subsystem. It is assumed that each subsystem has its own regulation system adjusting each internal component to produce the required input or output ore flow. Then, according to the properties of subsystems, several optimization problems may be defined and solved using appropriate methods like nonlinear optimization, integer programming, and model predictive control. Optimization may be performed according to several performance criteria (like daily ore product, costs of vehicles operations, optimal power consumption).

The ore flow optimizer 46 commands the whole process by supervising the input and output flow, collecting and analysing information from hardware and sensors as well as interaction with the ore flow coordinator 40, 42 and 44 with which it in turn interacts with the subsystems 30, 32, 34, 36 and 38. The ore flow optimizer 46 for underground mining is responsible for maximizing the efficiency of the whole mining process. The ore flow optimizer 46 also provides the ore flow targets for each subsystem so that the operation of the whole mine is done efficiently and optimally.

The overall system setup may depend on the type of a mine setup, where some subsystems are common such as loading by LHDs, crushing and hoisting, and some subsystems may differ from each other, such as transporting the ore by trucks, trains or/and conveyors. Fig. 1 gives one example of a mine setup. Each subsystem has its own inputs and outputs and may be controlled independently as a separate optimization problem but in a sequential order. The interconnection may be realized by the ore flow coordinators, where an ore flow coordinator is responsible for providing the relevant input to the following subsystem by translating/processing the output from the preceding one. Besides the link between the subsystems, the ore flow coordinator may also have other functionalities.

The processing leads to the optimizer 46 determining targets to be met by each subsystem, which targets can be expressed as key performance indicators (KPIs), such as a desired amount of ore be handled. The targets may be provided as the targets of a shift or daily or weekly targets. After, the targets have been determined the load flow optimizer 46 then transmits the targets for the subsystems, step 58.

These targets may be transmitted directly from the ore flow optimizer 46 to the ore control subsystems 30, 32, 34, 36 and 38. However, they may also be sent via the ore flow coordinators 40, 42 and 44 as is indicated in fig. 1. Optionally also targets for the ore flow coordinators may be determined.

An ore flow coordinator may thus receive own and connected subsystem targets, step 66 and it may then deliver or forward the received subsystem targets to the connected subsystems, step 68.

The first ore flow coordinator 40 may as an example receive own targets and subsystem targets for the first ore processing subsystem 30, the first ore transporting subsystem 32 and for the second ore transporting subsystem 34 and forward the subsystem targets to their destinations. The second ore flow coordinator 40 may in turn receive own targets and subsystem targets for the second ore transporting subsystem 34 and the second ore processing subsystem 36 and forward the subsystem targets to their destinations. The third ore flow coordinator 44 may finally receive own and subsystem targets for the second ore processing subsystem 36 and the third ore transporting subsystem 38 and forward the subsystem targets to their destinations. The target for a subsystem may be related to the amount of ore being handled or the rate of handling in the operation.

Here it may be mentioned that two ore flow coordinators need not collect input data and output data as well as send targets to the same ore control subsystem. It is enough if this is done by one ore flow coordinator. There is thus no need for duplicating information.

As can be seen in the flow chart in fig. 4, a subsystem then controls the local process to reach its targets, for instance through control of equipment used in the operation, step 70. The subsystems are thus controlled so that the targets are met. As can be seen above, also the ore flow coordinators may receive targets and control the intermediate storage system so that its targets are met. The targets of an intermediate ore storage system may be linked to the keeping of a certain ore storage level in the intermediate ore storage system.

As was mentioned above, each subsystem is controlled independently as a separate optimization problem but in a sequential order. The ore flow coordinators also coordinate the operation of the subsystem located upstream from it and the subsystem located downstream from it for avoiding disturbances.

Since each subsystem is implemented separately, the only required information are external input and output which are derived by the ore flow optimizer and may be KPIs related to the production of the ore to fulfil a production plan. By external input is meant input data that is external to a subsystem and may for instance be obtained from an ore flow coordinator. The rest of the information like the number of available drivers or capacities of the crushers is internal. The requirement for all subsystems is that they change their operations resulting in change of their output depending on the change of the external input from the ore flow coordinator.

The ore flow optimizer 46 may thereby create the global plan for one shift/day/week and send the corresponding KPIs through the ore flow coordinators to each subsystem. The subsystems then take the input and based on their internal input, such as mine topology, capacities and states of equipment, run their processes using their internal computational logics. After that, they report their output to the neighbouring ore flow coordinators. Alternatively, the ore flow coordinator may measure the output or derive the output from measurements of ore delivered to its associated intermediate ore storage system.

An ore flow coordinator may thus monitor the output of the connected subsystems. This monitoring may additionally be done with a view towards determining if they meet their targets or not. How this can generally be done is shown in a flow chart in fig. 5.

An ore flow coordinator monitoring a subsystem may obtain information about the output of operations carried out under the control of the subsystem, step 74. It may as an example be data indicative of the output of operations controlled by the subsystem, which may be a subsystem located upstream or downstream from the ore flow coordinator. The ore flow coordinator then investigates the output regarding meeting a current target, step 76, which may be done through comparing the output with the target. In case the target is an amount of ore after a certain time interval and the output is an ore flow rate, the amount of ore obtained at the ore flow rate during the time interval may be compared with the target in order to investigate if the target is met or not. In the investigation it is also possible to consider the status of the ore storage system, such as the storage level, the availabilities and/or conditions of the ore passes.

In case the current target is met, step 78, the subsystem is continued to be controlled based on the current target, step 80. However, in case the current target is not met, step 78, then it is possible to perform an optional rebalancing of the intermediate ore storage system associated with the ore flow coordinator, step 82. How such an intermediate ore storage system rebalancing may be carried will shortly be described.

After the rebalancing, the output may again be investigated with regard to meeting the current target. In case the current target is met, step 84, the subsystem is continued to be controlled based on the current target, step 86. However, in case the current target is not met, step 84, then the ore flow coordinator reports to or informs the ore flow optimizer 46, step 88. The ore flow optimizer 46 may then change the target for the specific subsystem. After the ore flow optimizer has determined a new target, the ore flow coordinator may then receive the new target, step 90, and forward it to the subsystem.

The ore flow optimizer may additionally determine if any other targets need to be determined. It may also reset all or some of the other targets.

It can thereby be seen that the ore flow coordinator analyses the subsystem outputs in relation to the KPIs. Based on this analysis, the process is continued in the next following downstream subsystem. If the KPI was not achieved, the ore flow coordinator communicates with the ore flow optimizer which takes the decision on whether the KPIs should be changed in a particular subsystem (local re-optimization) or the whole chain of subprocesses should be re-optimized (global re-optimization) to fulfil the production plan.

One example of the case when a certain KPI could not be achieved, i.e. a target cannot be met, is when some ore passes of an intermediate ore storage system are out of order which means that the required amount of ore could not be transported and as a result the whole production could be disturbed. As is mentioned above, in those cases the ore flow coordinator associated with the ore passes may rebalance the ore level to fulfil the KPI. If the KPI can still not be reached despite the rebalancing, the ore flow optimizer 46 may then take a decision on how to proceed. By local re-optimization, the execution of a subsystem with altered inputs is meant. In these cases, the internal logic "decides" on who to run the process in the optimal way. This approach could be used for a generic mine for process optimization.

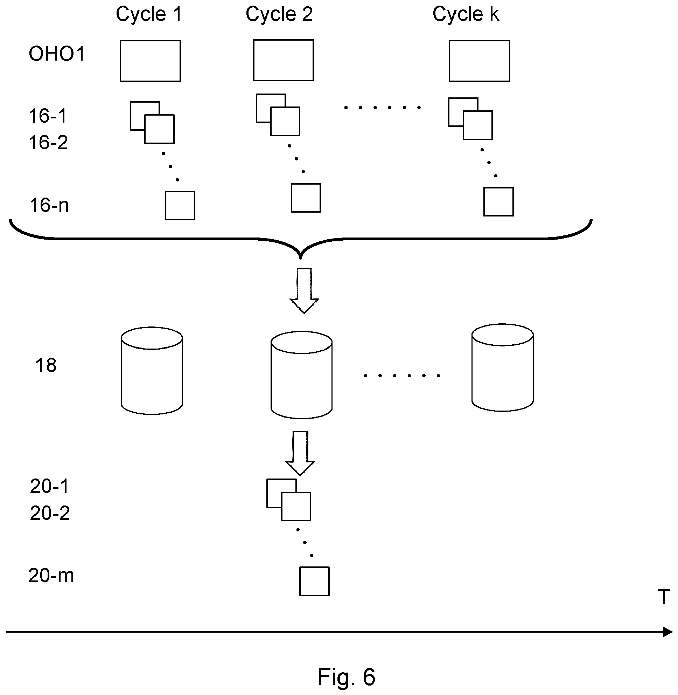

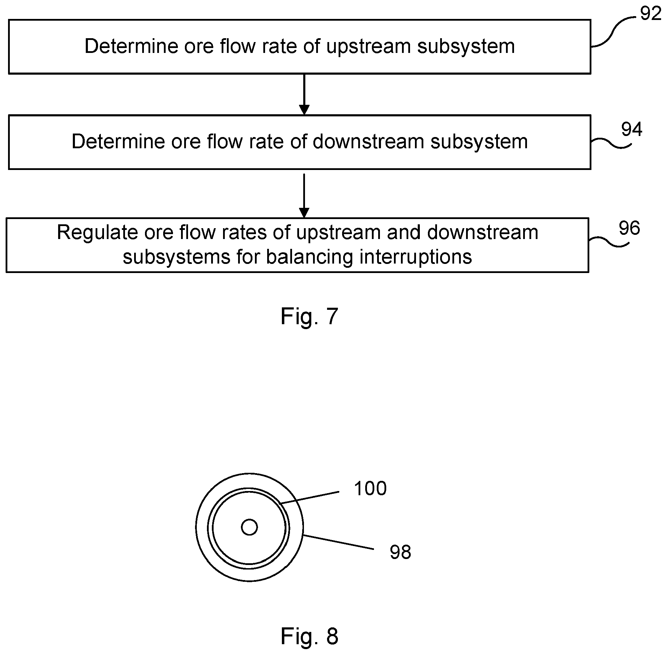

The ore flow coordinator is thus responsible for the rebalancing of the intermediate ore storage system. How this may be carried out will now be described in some more detail with reference being made to fig. 6 and 7.

Fig. 6 schematically shows the four first operations from fig. 1 together with a time line. This is useful for generally understanding the operation of the ore flow coordinators. Fig. 7 shows a number of steps performed by an ore flow coordinator for balancing its associated intermediate ore storage system.

Storage level balance and control is a part of an ore storage system and is coordinated through the ore flow coordinator, such as the first ore flow coordinator 40, and is used to balance input/output.

It can be seen in fig. 6 that the first ore handling operation OHO1 is performed in cycles. There is thus a blasting being made in a blast zone in a first cycle and then, in this same first cycle mineral comprising ore is transported from the blast zone to the first intermediate storage system 18 using LHDs, 16-1, 16-2, 16-n. This is then repeated for a second and a kth cycle. As an example, a first second and nth LHD 16-1, 16-.2 and 16-n is used to transport ore from the blast zone to the first intermediate storage system 18 during the first cycle, where the first intermediate storage system 18 comprises a number of intermediate storages, here realized as ore passes. It can also be seen that a number of wagons 20-1, 20-2 and 20-m are used to transport ore away from the first intermediate storage system 18. It can more particularly be seen that this latter transportation is carried out in a later phase, when the first ore handling operation is in its second cycle. The ore being transported by the LHDs 16-1, 16-2 and 16-n to the first ore storage system 18 in the first cycle is transported away from the first intermediate storage system 18 by the wagons 20-1, 20-2 and 20-n in the second cycle.

The idea of ore flow coordinator is illustrated in Fig. 6 for a specific example. The ore flow coordinator is a virtual junction box between two sub-systems, namely, LHDs and trucks. The LHDs transport the ore from blasting zones to ore passes. The input ore flow rate of the ore passes is discontinuous with respect to the time. The storage level is constant until one LHD dumps the ore. The ore flow coordinator can calculate the accumulated ore per time unit for each storage based on LHD characteristics and number of LHDs dumping ore on the storage. Moreover, it can regulate input flow rate and output flow rate of the storage to balance the different storage compartments. The ore flow coordinator has also the functionality of regulate the individual level of the storage compartments. Note that the ore flow coordinator can send ore flow references for upstream and downstream systems. This information is useful for systems responsible to manage the whole mine, for example global optimizer.

The operation of the ore flow coordinator may more particularly be the following:
Determine the ore flow rate of the upstream subsystem step 92.
Determine the ore flow rate of the downstream subsystem, step 94. These determinations may be made through receiving the rates from the neighbouring ore control subsystems. Alternatively, the rates may be determined through measurements of the amount and periodicity of ore being transported in and out of the associated intermediate ore storage system 18. The ore flow rate of the upstream subsystem 32 may as an example be determined based on the number of LHDs carrying ore from the blasting zone, their loading capacity, speed and the distance between the blasting zone and the first ore storage system 18. Also, the status of the LHDs may be considered. The determination of the ore flow rate of the downstream subsystem 34 may additionally be based on the ore flow rate of the upstream subsystem. It may also consider the number of wagons, their capacity and speed. This information may be used to set limits for the downstream ore flow rate. The status of the associated intermediate ore storage system may also be considered in these determinations.

Based on this information, the ore flow coordinator 40 may regulate the ore flow rates of the upstream and downstream subsystems for balancing interruptions, step 96. It may more particularly balance the rates so that the ore storage capacity of the intermediate ore storage system is not exceed or that the intermediate ore storage it is not emptied.

In this way ore flow transported between interconnected processes available at a mine are being balanced.

The ore flow coordinator may be implemented as a two-layer controller, where the first layer of the controller is responsible for regulating the adjacent processes with their interconnection and the second layer works as a link between the ore flow optimizer and all processes available at the mine. The second layer may be accomplished by exchanging the information with the ore flow optimizer about the input/output flow from each subsystem and taking the requests from the ore flow optimizer about the changes in the input/output flow if it is necessary.

The balancing functionality of the ore flow coordinator may be to act as a regulator between subsystems in order to obtain the desired ore flow rate for each subsystem and eliminate interruptions of the flow due to lack of coordination between subsystems. The ore flow coordinator could as is mentioned above be described as a virtual junction box between two subsystems that takes the output flow rate from the preceding upstream subsystem and uses it to calculate the input flow rate for the next downstream subsystem. The ore flow coordinator can also compensate the ore flow disturbances in the subsystems.

The ore flow coordinator is integrated in the ore control system. It can thus act as a junction box between interconnected sub-systems (LHD, truck, train, conveyor, crusher, and hoist) in the mine and it may provide continuous and smooth ore flow rate between sub-systems as described above as well as eliminate interruptions in the ore flow due to deficient coordination between subsystems.

The ore flow coordinator has several functionalities. Examples include:
- Ore flow monitoring
- Ore flow control at input and output ports of processes
- Ore volume control at conveyors, crushers, and hoist
- Information collection for visualization
- Information collection for general decision maker at the mine
- Information collection for simulator and digital twin.

The invention may be varied in a number of ways. For instance, in the example given earlier the hoisting operation was controlled by a single subsystem, It should be realized that the hoisting could be performed in several stages separated by intermediate storing. In this case, the ore hoisting subsystem could be divided into two or more further subsystems, separated from each other by ore flow coordinators for balancing purposes. As was mentioned earlier it is also possible to implement the ore flow coordination without using intermediate ore storages. The described ore control method could also be used for running "what if" analysis for different cases. It can also be used for Digital Twins.

The ore flow coordinators and ore flow optimizers may be implemented using software. They may thus be implemented using computer program code, which may be provided on one or more data carriers which performs the functionality of the coordinators or optimizers when the program code thereon is being loaded into one ore more computers. One such data carrier 98 with computer program code 100, in the form of a CD ROM disc, is schematically shown in fig. 8. Such computer program may as an alternative be provided on a server and downloaded therefrom into the one or more computer.

## Claims

1. A method of controlling ore flow in a mine, the method being performed by an ore flow control system (16) comprising a number of ore control subsystems (30, 32, 34, 36, 38), one or more ore flow coordinators (40, 42, 44) and an ore flow optimizer (46), where an ore flow coordinator (40) is configured to coordinate ore flow between operations controlled by two subsystems (32, 34) that are separated by an intermediate ore storage system (18, 22, 26) associated with the ore flow coordinator, where one of the subsystems (32) is an upstream subsystem and the other is a downstream subsystem (34), the method comprising the steps of:
- obtaining (50), in the ore flow optimizer (46), input data and output data of each subsystem, which input data comprises a planned amount of ore to be handled in an operation controlled by the subsystem and the output data comprises an actual amount of ore being handled by the operation controlled by the subsystem,
- processing (54), by the ore flow optimizer (46), the input and output data,
- determining (56), by the ore flow optimizer (46), targets to be met by each of the subsystems and ore flow coordinators based on the processing,
- transmitting (58), by the ore flow optimizer (46), the targets to the subsystems and ore flow coordinators in order for the subsystems to control (70) the corresponding operations for reaching the targets, and
- controlling, (60) by the subsystems, the corresponding operations local processes for reaching the targets, and
- controlling, by the ore flow coordinator, the operation of the upstream subsystem (32) and downstream subsystem (34) for avoiding interruptions while keeping the associated intermediate ore storage system at a certain ore storage level.

2. The method according to claim 1, further comprising, obtaining (52), in the ore flow optimizer (46), input data and output data of each ore flow coordinator, the input data comprising a planned amount of ore to be handled in an operation controlled by the downstream subsystem and the amount of ore delivered from an operation controlled by the upstream subsystem and the output data comprising an actual amount of ore available for handling by the operation controlled by the downstream subsystem.

3. The method according to claim 2, further comprising, in and by the ore flow coordinator, collecting (60) input data and output data of subsystems for which ore flow coordination is made, determining (62) own input data and output data and transmitting (64) the own and collected input data and output data to the ore flow optimizer (46).

4. The method according to claim 3, further comprising, in and by the ore flow coordinator, receiving (66) own and connected subsystem targets from the ore flow optimizer and delivering (68) the received subsystem targets to the subsystems for which ore flow coordination is made.

5. The method according to any previous claim, further comprising, in the ore flow coordinator, investigating (76) the output of operations controlled by a subsystem for which ore flow coordination is being performed, determining (78) if the target of the subsystem will be met or not based on the investigation and reporting (88) to the ore flow optimizer (46) if the subsystem is unable to reach its target in order for the ore flow optimizer to update at least said target.

6. The method according to claim 5, wherein if determining, in the ore flow coordinator, that a subsystem for which ore flow coordination is performed is unable to meet its target, further performing rebalancing (82) the associated intermediate ore storage system and only reporting the missed target if the target is still not met after rebalancing.

7. The method according to claim 6, wherein the rebalancing of the intermediate ore storage system comprises determining (92) the ore flow rate of the operations controlled by the upstream subsystem, determining the ore flow rate of the operations controlled by the downstream subsystem and regulating the ore flow rates for balancing interruptions.

8. The method according to claim 7, wherein the determining of the ore flow rate of the operations controlled by the downstream subsystem is based on the determined ore flow rate of the operations controlled by the upstream subsystem.

9. The method according to claim 7 or 8, further comprising determining, in the ore flow coordinator, the status of the associated ore storage system, wherein the step of determining the ore flow rate of the operations controlled by the downstream subsystem is based also on said status.

10. The method according to claim 8 or 9, further comprising informing, by the ore flow coordinator, the downstream subsystem of the ore flow rate to be used.

11. An ore flow control system (10) for controlling ore flow in a mine, the ore flow control system comprising a number of ore control subsystems (30, 32, 34, 36, 38), one or more ore flow coordinators (40, 42, 44) and an ore flow optimizer (46), where an ore flow coordinator (40) is configured to coordinate ore flow between operations controlled by two subsystems that are separated by an intermediate ore storage system (18, 22, 26) associated with the ore flow coordinator, where one of the subsystems (32) is an upstream subsystem and the other is a downstream subsystem (34),
the ore flow optimizer (46) being configured to:
- obtain input data and output data of each subsystem (30, 32, 34, 36, 38), which input data comprises a planned amount of ore to be handled in an operation controlled by the subsystem and the output data comprises an actual amount of ore being handled by the operation controlled by the subsystem,
- process the input and output data,
- determine targets to be met by each of the subsystems and ore flow coordinators based on the processing, and
- transmit the targets to the subsystems and ore flow coordinators, and
- the subsystems (30, 32, 34, 36, 38) being configured to control the corresponding operations for reaching the targets, and
the ore flow coordinator (40) being configured to control the operation of the upstream subsystem (32) and downstream subsystem (34) for avoiding interruptions while keeping the associated intermediate ore storage system at a certain ore storage level.

12. The ore flow control system according to claim 13, wherein the ore flow optimizer (46) is further configured to obtain input data and output data of each ore flow coordinator, the input data comprising a planned amount of ore to be handled in an operation controlled by the downstream subsystem and the amount of ore delivered from an operation controlled by the upstream subsystem and the output data comprising an actual amount of ore available for handling by the operation controlled by the downstream subsystem.

13. The ore flow control system according to claim 12, wherein the ore flow coordinator is further configured to collect input data and output data of subsystems for which ore flow coordination is made, determine own input data and output data, transmit the own and collected input data and output data to the ore flow optimizer (46).

14. The ore flow control system according to claim 13, wherein the ore flow coordinator is further configured to receive own and subsystem targets from the ore flow optimizer and deliver the received subsystem targets to the subsystems for which ore flow coordination is made.

15. A computer program product for controlling ore flow in a mine using an ore flow control system comprising a number of ore control subsystems (30, 32, 34, 36, 38), one or more ore flow coordinators (40, 42, 44) and an ore flow optimizer (46), where an ore flow coordinator (40) is configured to coordinate ore flow between operations controlled by two subsystems that are separated by an intermediate ore storage system (18, 22, 26) associated with the ore flow coordinator, where one of the subsystems (32) is an upstream subsystem and the other is a downstream subsystem (34), said computer program product being provided on a data carrier (98) comprising computer program code (100) configured to cause the ore flow control system to, when said computer program code is loaded into at least one computer forming the ore control system
- obtain input data and output data of each subsystem (30, 32, 34, 36, 38), which input data comprises a planned amount of ore to be handled in an operation controlled by the subsystem and the output data comprises an actual amount of ore being handled by the operation controlled by the subsystem,
- process the input and output data,
- determine targets to be met by each of the subsystems and ore flow coordinators based on the processing,
- transmit the targets to the subsystems and ore flow coordinators in order to allow the subsystems (30, 32, 34, 36, 38) to control the corresponding operations for reaching the targets, and
- control the operation of the upstream subsystem (32) and downstream subsystem (34) for avoiding interruptions while keeping the associated intermediate ore storage system at a certain ore storage level.

## Patentansprüche

1. Verfahren zur Steuerung des Erzflusses in einer Mine, wobei das Verfahren durch ein Erzflusssteuerungssystem (16) durchgeführt wird, das eine Anzahl an Erzsteuerungsuntersystemen (30, 32, 34, 36, 38), eine oder mehrere Erzflusskoordinierungseinrichtungen (40, 42, 44) und eine Erzflussoptimierungseinrichtung (46) umfasst, wobei eine Erzflusskoordinierungseinrichtung (40) dazu ausgestaltet ist, den Erzfluss zwischen Betriebsvorgängen zu koordinieren, die durch zwei Untersysteme (32, 34) gesteuert werden, die durch ein Erzzwischenspeichersystem (18, 22, 26) getrennt sind, das der Erzflusskoordinierungseinrichtung zugeordnet ist, wobei eines der Untersysteme (32) ein vorgelagertes Untersystem ist und das andere ein nachgelagertes Untersystem (34) ist, wobei das Verfahren folgende Schritte umfasst:
- Erhalten (50) - in der Erzflussoptimierungseinrichtung (46) - von Eingangsdaten und Ausgangsdaten jedes Untersystems, wobei die Eingangsdaten eine geplante Menge an Erz umfassen, die in einem durch das Untersystem gesteuerten Betriebsvorgang zu bearbeiten ist, und die Ausgangsdaten eine tatsächliche Menge an Erz umfassen, die im Rahmen des durch das Untersystem gesteuerten Betriebsvorgangs bearbeitet wird,
- Verarbeiten (54) - durch die Erzflussoptimierungseinrichtung (46) - der Eingangs- und Ausgangsdaten,
- Bestimmen (56) - durch die Erzflussoptimierungseinrichtung (46) - von Sollwerten, die durch jede(s) der Untersysteme und Erzflusskoordinierungseinrichtungen zu erreichen sind, basierend auf der Verarbeitung,
- Übertragen (58) - durch die Erzflussoptimierungseinrichtung (46) - der Sollwerte an die Untersysteme und Erzflusskoordinierungseinrichtungen, damit die Untersysteme die entsprechenden Betriebsvorgänge dahingehend steuern (70), dass die Sollwerte erreicht werden, und
- Steuern (60) - durch die Untersysteme - der lokalen Prozesse der entsprechenden Betriebsvorgänge dahingehend, dass die Sollwerte erreicht werden, und
- Steuern - durch die Erzflusskoordinierungseinrichtung - des Betriebs des vorgelagerten Untersystems (32) und des nachgelagerten Untersystems (34) dahingehend, dass Unterbrechungen vermieden werden, während das zugeordnete Erzzwischenspeichersystem bei einem bestimmten Erzspeicherniveau gehalten wird.

2. Verfahren nach Anspruch 1, ferner umfassend:
Erhalten (52) - in der Erzflussoptimierungseinrichtung (46) - von Eingangsdaten und Ausgangsdaten jeder Erzflusskoordinierungseinrichtung, wobei die Eingangsdaten eine geplante Menge an Erz, die in einem durch das nachgelagerte Untersystem gesteuerten Betriebsvorgang zu bearbeiten ist, und die Menge an Erz, die von einem durch das vorgelagerte Untersystem gesteuerten Betriebsvorgang bereitgestellt wird, umfassen und die Ausgangsdaten eine tatsächliche Menge an Erz umfassen, die zum Bearbeiten im Rahmen des durch das nachgelagerte Untersystem gesteuerten Betriebsvorgangs verfügbar ist.

3. Verfahren nach Anspruch 2, ferner umfassend: in der und durch die Erzflusskoordinierungseinrichtung, Sammeln (60) von Eingangsdaten und Ausgangsdaten von Untersystemen, für die eine Erzflusskoordinierung erfolgt, Bestimmen (62) eigener Eingangsdaten und Ausgangsdaten und Übertragen (64) der eigenen und gesammelten Eingangsdaten und Ausgangsdaten an die Erzflussoptimierungseinrichtung (46).

4. Verfahren nach Anspruch 3, ferner umfassend: in der und durch die Erzflusskoordinierungseinrichtung, Empfangen (66) von eigenen Sollwerten und Sollwerten angeschlossener Untersysteme von der Erzflussoptimierungseinrichtung und Bereitstellen (68) der empfangenen Untersystem-Sollwerte an die Untersysteme, für die eine Erzflusskoordinierung erfolgt.

5. Verfahren nach einem vorherigen Anspruch, ferner umfassend: in der Erzflusskoordinierungseinrichtung, Untersuchen (76) des Ausstoßes von Betriebsvorgängen, die durch ein Untersystem gesteuert werden, für die eine Erzflusskoordinierung erfolgt, Bestimmen (78), ob der Sollwert des Untersystems erreicht werden wird oder nicht, basierend auf der Untersuchung und Melden (88) an die Erzflussoptimierungseinrichtung (46), wenn das Untersystem nicht in der Lage ist, seinen Sollwert zu erreichen, damit die Erzflussoptimierungseinrichtung wenigstens den Sollwert aktualisiert.

6. Verfahren nach Anspruch 5, wobei, wenn in der Erzflusskoordinierungseinrichtung bestimmt wird, dass ein Untersystem, für das eine Erzflusskoordinierung erfolgt, nicht in der Lage ist, seinen Sollwert zu erreichen, ferner ein Neuaustarieren (82) des zugeordneten Erzzwischenspeichersystems erfolgt und der verfehlte Sollwert nur dann gemeldet wird, wenn der Sollwert nach dem Neuaustarieren noch immer nicht erreicht wird.

7. Verfahren nach Anspruch 6, wobei das Neuaustarieren des Erzzwischenspeichersystems ein Bestimmen (92) der Erzflussrate der durch das vorgelagerte Untersystem gesteuerten Betriebsvorgänge, ein Bestimmen der Erzflussrate der durch das nachgelagerte Untersystem gesteuerten Betriebsvorgänge und ein Regeln der Erzflussraten dahingehend, dass Unterbrechungen ausgeglichen werden, umfasst.

8. Verfahren nach Anspruch 7, wobei das Bestimmen der Erzflussrate der durch das nachgelagerte Untersystem gesteuerten Betriebsvorgänge auf der bestimmten Erzflussrate der durch das vorgelagerte Untersystem gesteuerten Betriebsvorgänge basiert.

9. Verfahren nach Anspruch 7 oder 8, das ferner ein Bestimmen - in der Erzflusskoordinierungseinrichtung - des Status des zugeordneten Erzspeichersystems umfasst, wobei der Schritt des Bestimmens der Erzflussrate der durch das nachgelagerte Untersystem gesteuerten Betriebsvorgänge auch auf diesem Status basiert.

10. Verfahren nach Anspruch 8 oder 9, das ferner ein Informieren - durch die Erzflusskoordinierungseinrichtung - des nachgelagerten Untersystems über die zu verwendende Erzflussrate umfasst.

11. Erzflusssteuerungssystem (10) zur Steuerung des Erzflusses in einer Mine, wobei das Erzflusssteuerungssystem eine Anzahl an Erzsteuerungsuntersystemen (30, 32, 34, 36, 38), eine oder mehrere Erzflusskoordinierungseinrichtungen (40, 42, 44) und eine Erzflussoptimierungseinrichtung (46) umfasst, wobei eine Erzflusskoordinierungseinrichtung (40) dazu ausgestaltet ist, den Erzfluss zwischen Betriebsvorgängen zu koordinieren, die durch zwei Untersysteme gesteuert werden, die durch ein Erzzwischenspeichersystem (18, 22, 26) getrennt sind, das der Erzflusskoordinierungseinrichtung zugeordnet ist, wobei eines der Untersysteme (32) ein vorgelagertes Untersystem ist und das andere ein nachgelagertes Untersystem (34) ist,
wobei die Erzflussoptimierungseinrichtung (46) für Folgendes ausgestaltet ist:
- Erhalten von Eingangsdaten und Ausgangsdaten jedes Untersystems (30, 32, 34, 36, 38), wobei die Eingangsdaten eine geplante Menge an Erz umfassen, die in einem durch das Untersystem gesteuerten Betriebsvorgang zu bearbeiten ist, und die Ausgangsdaten eine tatsächliche Menge an Erz umfassen, die im Rahmen des durch das Untersystem gesteuerten Betriebsvorgangs bearbeitet wird,
- Verarbeiten der Eingangs- und Ausgangsdaten,
- Bestimmen von Sollwerten, die durch jede(s) der Untersysteme und Erzflusskoordinierungseinrichtungen zu erreichen sind, basierend auf der Verarbeitung und
- Übertragen der Sollwerte an die Untersysteme und Erzflusskoordinierungseinrichtungen, und
- wobei die Untersysteme (30, 32, 34, 36, 38) dazu ausgestaltet sind, die entsprechenden Betriebsvorgänge dahingehend zu steuern, dass die Sollwerte erreicht werden, und
die Erzflusskoordinierungseinrichtung (40) dazu ausgestaltet ist, den Betrieb des vorgelagerten Untersystems (32) und des nachgelagerten Untersystems (34) dahingehend zu steuern, dass Unterbrechungen vermieden werden, während das zugeordnete Erzzwischenspeichersystem bei einem bestimmten Erzspeicherniveau gehalten wird.

12. Erzflusssteuerungssystem nach Anspruch 13, wobei die Erzflussoptimierungseinrichtung (46) ferner dazu ausgestaltet ist, Eingangsdaten und Ausgangsdaten jeder Erzflusskoordinierungseinrichtung zu erhalten, wobei die Eingangsdaten eine geplante Menge an Erz, die in einem durch das nachgelagerte Untersystem gesteuerten Betriebsvorgang zu bearbeiten ist, und die Menge an Erz, die von einem durch das vorgelagerte Untersystem gesteuerten Betriebsvorgang bereitgestellt wird, umfassen und die Ausgangsdaten eine tatsächliche Menge an Erz umfassen, die zum Bearbeiten im Rahmen des durch das nachgelagerte Untersystem gesteuerten Betriebsvorgangs verfügbar ist.

13. Erzflusssteuerungssystem nach Anspruch 12, wobei die Erzflusskoordinierungseinrichtung ferner dazu ausgestaltet ist, Eingangsdaten und Ausgangsdaten von Untersystemen, für die eine Erzflusskoordinierung erfolgt, zu sammeln, eigene Eingangsdaten und Ausgangsdaten zu bestimmen und die eigenen und gesammelten Eingangsdaten und Ausgangsdaten an die Erzflussoptimierungseinrichtung (46) zu übertragen.

14. Erzflusssteuerungssystem nach Anspruch 13, wobei die Erzflusskoordinierungseinrichtung ferner dazu ausgestaltet ist, eigene und Untersystem-Sollwerte von der Erzflussoptimierungseinrichtung zu empfangen und die empfangenen Untersystem-Sollwerte den Untersystemen bereitzustellen, für die eine Erzflusskoordinierung erfolgt.

15. Computerprogrammprodukt zur Steuerung des Erzflusses in einer Mine unter Verwendung eines Erzflusssteuerungssystems, das eine Anzahl an Erzsteuerungsuntersystemen (30, 32, 34, 36, 38), eine oder mehrere Erzflusskoordinierungseinrichtungen (40, 42, 44) und eine Erzflussoptimierungseinrichtung (46) umfasst, wobei eine Erzflusskoordinierungseinrichtung (40) dazu ausgestaltet ist, den Erzfluss zwischen Betriebsvorgängen zu koordinieren, die durch zwei Untersysteme gesteuert werden, die durch ein Erzzwischenspeichersystem (18, 22, 26) getrennt sind, das der Erzflusskoordinierungseinrichtung zugeordnet ist, wobei eines der Untersysteme (32) ein vorgelagertes Untersystem ist und das andere ein nachgelagertes Untersystem (34) ist, wobei das Computerprogrammprodukt auf einem Datenträger (98) bereitgestellt ist, der Computerprogrammcode (100) umfasst, der dazu ausgestaltet ist, das Erzflusssteuerungssystem zu Folgendem zu veranlassen, wenn der Computerprogrammcode in wenigstens einen Computer geladen wird, der das Erzsteuerungssystem ausbildet:
- Erhalten von Eingangsdaten und Ausgangsdaten jedes Untersystems (30, 32, 34, 36, 38), wobei die Eingangsdaten eine geplante Menge an Erz umfassen, die in einem durch das Untersystem gesteuerten Betriebsvorgang zu bearbeiten ist, und die Ausgangsdaten eine tatsächliche Menge an Erz umfassen, die im Rahmen des durch das Untersystem gesteuerten Betriebsvorgangs bearbeitet wird,
- Verarbeiten der Eingangs- und Ausgangsdaten,
- Bestimmen von Sollwerten, die durch jede(s) der Untersysteme und Erzflusskoordinierungseinrichtungen zu erreichen sind, basierend auf der Verarbeitung,
- Übertragen der Sollwerte an die Untersysteme und Erzflusskoordinierungseinrichtungen, um den Untersystemen (30, 32, 34, 36, 38) zu erlauben, die entsprechenden Betriebsvorgänge dahingehend zu steuern, dass die Sollwerte erreicht werden, und
- Steuern des Betriebs des vorgelagerten Untersystems (32) und des nachgelagerten Untersystems (34) dahingehend, dass Unterbrechungen vermieden werden, während das zugeordnete Erzzwischenspeichersystem bei einem bestimmten Erzspeicherniveau gehalten wird.

## Revendications

1. Procédé de commande d'écoulement de minerai dans une mine, le procédé étant réalisé par un système de commande d'écoulement de minerai (16) comprenant un certain nombre de sous-systèmes de commande de minerai (30, 32, 34, 36, 38), un ou plusieurs coordinateurs d'écoulement de minerai (40, 42, 44) et un optimiseur d'écoulement de minerai (46), où un coordinateur d'écoulement de minerai (40) est configuré pour coordonner un écoulement de minerai entre des opérations commandées par deux sous-systèmes (32, 34) qui sont séparés par un système de stockage de minerai intermédiaire (18, 22, 26) associé au coordinateur d'écoulement de minerai, où l'un des sous-systèmes (32) est un sous-système amont et l'autre est un sous-système aval (34), le procédé comprenant les étapes consistant à :
- obtenir (50), dans l'optimiseur d'écoulement de minerai (46), des données d'entrée et des données de sortie de chaque sous-système, lesquelles données d'entrée comprennent une quantité planifiée de minerai à traiter dans une opération commandée par le sous-système et les données de sortie comprennent une quantité réelle de minerai en train d'être manipulé par l'opération commandée par le sous-système,
- traiter (54), par l'optimiseur d'écoulement de minerai (46), les données d'entrée et de sortie,
- déterminer (56), par l'optimiseur d'écoulement de minerai (46), des objectifs à satisfaire par chacun des sous-systèmes et des coordinateurs d'écoulement de minerai sur la base du traitement,
- transmettre (58), par l'optimiseur d'écoulement de minerai (46), les objectifs aux sous-systèmes et aux coordinateurs d'écoulement de minerai afin que les sous-systèmes commandent (70) les opérations correspondantes pour atteindre les objectifs, et
- commander, (60) par les sous-systèmes, les processus locaux d'opérations correspondantes pour atteindre les objectifs, et
- commander, par le coordinateur d'écoulement de minerai, l'opération du sous-système amont (32) et du sous-système aval (34) pour éviter des interruptions tout en maintenant le système de stockage de minerai intermédiaire associé à un certain niveau de stockage de minerai.

2. Procédé selon la revendication 1, comprenant en outre, l'obtention (52), dans l'optimiseur d'écoulement de minerai (46), de données d'entrée et de données de sortie de chaque coordinateur d'écoulement de minerai, les données d'entrée comprenant une quantité planifiée de minerai à manipuler dans une opération commandée par le sous-système aval et la quantité de minerai distribuée à partir d'une opération commandée par le sous-système amont et les données de sortie comprenant une quantité réelle de minerai disponible pour manipulation par l'opération commandée par le sous-système aval.

3. Procédé selon la revendication 2, comprenant en outre, dans et par le coordinateur d'écoulement de minerai, la collecte (60) de données d'entrée et de données de sortie de sous-systèmes pour lesquels une coordination d'écoulement de minerai est effectuée, la détermination (62) de données d'entrée et données de sortie propres et la transmission (64) des données d'entrée et des données de sortie propres et collectées à l'optimiseur d'écoulement de minerai (46).

4. Procédé selon la revendication 3, comprenant en outre, dans et par le coordinateur d'écoulement de minerai, la réception (66) d'objectifs de sous-systèmes propres et connectés en provenance de l'optimiseur d'écoulement de minerai et la distribution (68) des objectifs de sous-systèmes reçus aux sous-systèmes pour lesquels une coordination d'écoulement de minerai est effectuée.

5. Procédé selon l'une quelconque des revendications précédentes, comprenant en outre, dans le coordinateur d'écoulement de minerai, l'examen (76) de la sortie d'opérations commandées par un sous-système pour lequel une coordination d'écoulement de minerai est en train d'être réalisée, la détermination (78) de si l'objectif du sous-système sera satisfait ou non sur la base de l'examen et du rapport (88) à l'optimiseur d'écoulement de minerai (46) si le sous-système est incapable d'atteindre son objectif afin que l'optimiseur d'écoulement de minerai mette à jour au moins ledit objectif.

6. Procédé selon la revendication 5, dans lequel, s'il est déterminé, dans le coordinateur d'écoulement de minerai, qu'un sous-système pour lequel une coordination d'écoulement de minerai est réalisée est incapable de satisfaire son objectif, réaliser plus avant un rééquilibrage (82) du système de stockage de minerai intermédiaire associé et uniquement rapporter l'objectif manqué si l'objectif n'est toujours pas satisfait après rééquilibrage.

7. Procédé selon la revendication 6, dans lequel le rééquilibrage du système de stockage de minerai intermédiaire comprend la détermination (92) du débit de minerai des opérations commandées par le sous-système amont, la détermination du débit de minerai des opérations commandées par le sous-système aval et la régulation des débits de minerai pour équilibrer des interruptions.

8. Procédé selon la revendication 7, dans lequel la détermination du débit de minerai des opérations commandées par le sous-système aval est basée sur le débit de minerai déterminé des opérations commandées par le sous-système amont.

9. Procédé selon la revendication 7 ou la revendication 8, comprenant en outre la détermination, dans le coordinateur d'écoulement de minerai, de l'état du système de stockage de minerai associé, l'étape de détermination du débit de minerai des opérations commandées par le sous-système aval étant également basée sur ledit état.

10. Procédé selon la revendication 8 ou la revendication 9, comprenant en outre le fait d'informer, par le coordinateur d'écoulement de minerai, le sous-système aval du débit de minerai à utiliser.

11. Système de commande d'écoulement de minerai (10) pour commander un écoulement de minerai dans une mine, le système de commande d'écoulement de minerai comprenant un certain nombre de sous-systèmes de commande de minerai (30, 32, 34, 36, 38), un ou plusieurs coordinateurs d'écoulement de minerai (40, 42, 44) et un optimiseur d'écoulement de minerai (46), où un coordinateur d'écoulement de minerai (40) est configuré pour coordonner un écoulement de minerai entre des opérations commandées par deux sous-systèmes qui sont séparés par un système de stockage de minerai intermédiaire (18, 22, 26) associé au coordinateur d'écoulement de minerai, où l'un des sous-systèmes (32) est un sous-système amont et l'autre étant un sous-système aval (34),
l'optimiseur d'écoulement de minerai (46) étant configuré pour :
- obtenir des données d'entrée et des données de sortie de chaque sous-système (30, 32, 34, 36, 38), lesquelles données d'entrée comprennent une quantité planifiée de minerai à manipuler dans une opération commandée par le sous-système et les données de sortie comprennent une quantité réelle de minerai en train d'être manipulé par l'opération commandée par le sous-système,
- traiter les données d'entrée et de sortie,
- déterminer des objectifs à satisfaire par chacun des sous-systèmes et des coordinateurs d'écoulement de minerai sur la base du traitement, et
- transmettre les objectifs aux sous-systèmes et aux coordinateurs d'écoulement de minerai, et
- les sous-systèmes (30, 32, 34, 36, 38) étant configurés pour commander les opérations correspondantes pour atteindre les objectifs, et
le coordinateur d'écoulement de minerai (40) étant configuré pour commander l'opération du sous-système amont (32) et du sous-système aval (34) afin d'éviter des interruptions tout en maintenant le système de stockage de minerai intermédiaire associé à un certain niveau de stockage de minerai.

12. Système de commande d'écoulement de minerai selon la revendication 13, dans lequel l'optimiseur d'écoulement de minerai (46) est en outre configuré pour obtenir des données d'entrée et des données de sortie de chaque coordinateur d'écoulement de minerai, les données d'entrée comprenant une quantité planifiée de minerai à manipuler dans une opération commandée par le sous-système aval et la quantité de minerai distribuée à partir d'une opération commandée par le sous-système amont et les données de sortie comprenant une quantité réelle de minerai disponible pour manipulation par l'opération commandée par le sous-système aval.

13. Système de commande d'écoulement de minerai selon la revendication 12, dans lequel le coordinateur d'écoulement de minerai est en outre configuré pour collecter des données d'entrée et des données de sortie de sous-systèmes pour lesquels une coordination d'écoulement de minerai est effectuée, déterminer des données d'entrée et des données de sortie propres, transmettre les données d'entrée et données de sortie propres et collectées à l'optimiseur d'écoulement de minerai (46).

14. Système de commande d'écoulement de minerai selon la revendication 13, dans lequel le coordinateur d'écoulement de minerai est en outre configuré pour recevoir des objectifs et de sous-systèmes propres en provenance de l'optimiseur d'écoulement de minerai et distribuer les objectifs de sous-systèmes reçus aux sous-systèmes pour lesquels une coordination d'écoulement de minerai est effectuée.

15. Produit de programme informatique pour commander un écoulement de minerai dans une mine à l'aide d'un système de commande d'écoulement de minerai comprenant un certain nombre de sous-systèmes de commande de minerai (30, 32, 34, 36, 38), un ou plusieurs coordinateurs d'écoulement de minerai (40, 42, 44) et un optimiseur d'écoulement de minerai (46), où un coordinateur d'écoulement de minerai (40) est configuré pour coordonner un écoulement de minerai entre des opérations commandées par deux sous-systèmes qui sont séparés par un système de stockage de minerai intermédiaire (18, 22, 26) associé au coordinateur d'écoulement de minerai, où l'un des sous-systèmes (32) est un sous-système amont et l'autre étant un sous-système aval (34), ledit produit de programme informatique étant prévu sur un support de données (98) comprenant un code de programme informatique (100) configuré pour amener le système de commande d'écoulement de minerai à, lorsque ledit code de programme informatique est chargé dans au moins un ordinateur formant le système de commande de minerai
- obtenir des données d'entrée et des données de sortie de chaque sous-système (30, 32, 34, 36, 38), lesquelles données d'entrée comprennent une quantité planifiée de minerai à traiter dans une opération commandée par le sous-système et les données de sortie comprennent une quantité réelle de minerai traité par l'opération commandée par le sous-système,
- traiter les données d'entrée et de sortie,
- déterminer des objectifs à satisfaire par chacun des sous-systèmes et des coordinateurs d'écoulement de minerai sur la base du traitement,
- transmettre les objectifs aux sous-systèmes et aux coordinateurs d'écoulement de minerai afin de permettre aux sous-systèmes (30, 32, 34, 36, 38) de commander les opérations correspondantes pour atteindre les objectifs, et
- commander le fonctionnement du sous-système amont (32) et du sous-système aval (34) pour éviter des interruptions tout en maintenant le système de stockage de minerai intermédiaire associé à un certain niveau de stockage de minerai.
